# EUROPEAN PATENT APPLICATION

(11) **EP 2 056 246 A1**
(43) Date of publication of application: **06.05.2009**
(21) Application number: 07119672.9
(22) Date of filing: 30.10.2007
(51) Int. Cl.: G06Q 20/00

(54) **Electronic payments using payment cards**

(71) Applicant: Nederlandse Organisatie voor toegepast-natuurwetenschappelijk onderzoek TNO, 2628 VK Delft (NL)
(72) Inventor: van der Waaij, Bram Dirk, 2628 VK Delft (NL); Siljee, Johanneke, 2628 VK Delft (NL); Broekhuijsen, Bertram Jeroen, 2628 VK Delft (NL); Ponsioen, Celeste, 2628 VK Delft (NL); Maas, Aloys, 2628 VK Delft (NL); Aten, Robert, 2628 VK Delft (NL); Hoepman, Jaap-Henk, 2628 VK Delft (NL); van Loon, Joleen, 2628 VK Delft (NL); Smit, Monica, 2628 VK Delft (NL)
(74) Representative: Hatzmann, Martin

(57) **Abstract**

A method of making a payment uses a mobile communication device (1) and a payment card (2), both the mobile communication device (1) and the payment card (2) being provided with a respective near field communication unit (11, 21) and at least the mobile communication device (1) being provided with an input unit (12) for inputting data. The method comprises the steps of:
• the mobile communication device (1) receiving, through its near field communication unit (11), account data (ACD) from the payment card (2),
• the mobile communication device (1) receiving, through its near field communication unit (11) or its input unit (12), amount data (AMD) indicative of an amount to be paid,
• the mobile communication device (1) transmitting, via a mobile communication link, a payment order (PAO) to a first financial institution (100), the payment order including the account data (ACD) and the amount data (AMD),
• the first financial institution (100) transferring the amount indicated by the amount data (AMD) to a second financial institution (200) identified by the account data (ACD) and transmitting a confirmation (CON) to the mobile communication device (1),
• the second financial institution (200), upon receipt of the amount, sending a previously stored password (PWD) to the mobile communication device (1), and
• the mobile communication device (1) rendering the password (PWD).

## Description

The present invention relates to electronic payments using payment cards. More in particular, the present invention relates to a method of and a system for carrying out electronic payment transactions using at least one payment card, such as a credit card, and a mobile telecommunication device, such as a mobile (cellular) telephone.

It is known to use payment cards and mobile communication devices, such as mobile telephones, to make payments. European Patent Application EP 0 785 534, for example, discloses a method of performing financial transactions by means of mobile telephone sets. This known method utilizes smart cards accommodated in the mobile telephones to provide end-to-end transactions between the smart cards and their counterparts (security units) at the service providers or financial institutions. However, this known method is not suitable for making payments between individuals as it requires each receiving party to have a security unit.

It is further known to use near field communication (NFC) in financial transactions. International Patent Application WO 2006/087503, for example, discloses a mobile terminal which includes a near field or RFID tag. This near field tag can apparently be used to make a payment. However, it is not disclosed how the mobile terminal provided with a near field tag can make payments between mobile terminals.

It is an object of the present invention to overcome these and other problems of the Prior Art and to provide a method of and a system for making electronic payments between individuals, in which the payment transactions require a minimum effort.

It is a further object of the present invention to provide a method of and a system for making electronic payments between individuals which do not require smart cards and corresponding security units.

It is a still further object of the present invention to provide a method of and a system for making electronic payments between individuals which allows the recipient of a payment to know that the payment was successful.

Accordingly, the present invention provides a method of making a payment using a mobile communication device and a payment card, both the mobile communication device and the payment card being provided with a respective near field communication unit and at least the mobile communication device being provided with an input unit for inputting data, the method comprising the steps of:
- the mobile communication device receiving, through its near field communication unit, account data from the payment card,
- the mobile communication device receiving, through its near field communication unit or its input unit, amount data indicative of an amount to be paid,
- the mobile communication device transmitting, via a mobile communication link, a payment order to a first financial institution, the payment order including the account data and the amount data,
- the first financial institution, upon receipt of the payment order, transferring the amount indicated by the amount data to a second financial institution identified by the account data,
- the first financial institution transmitting a confirmation to the mobile communication device,
- the second financial institution, upon receipt of the amount, sending a previously stored password to the mobile communication device, and
- the mobile communication device rendering the password. By using near field communication (NFC) to convey account data from the payment card to the mobile communication device, the number of data items to be manually entered into the mobile communication device is considerably reduced while the probability of introducing errors is also significantly reduced. Accordingly, the efficiency of the payment transaction is improved. By manually inputting amount data into the input unit the user has greater control over the amount of the payment, however, this may also introduce errors. Accordingly, the amount data may also be transferred using NFC.

The account data may comprise data identifying an account, typically in the name of the user of the payment card, at the second financial institution (the receiving or second account). The payment order may additionally comprise data identifying an account, typically the name of the user of the mobile communication device, at the first financial institution (the paying or first account). However, the first financial institution may derive the additional data identifying the first account from an identification of the mobile communication device, for example its telephone number.

The amount data may be input into the payment card using a card reader with a keypad or a similar device. Optionally, the user of the mobile communication device inputs the same amount data into her (first) mobile communication device so as to state agreement over the amount of the transaction.

It is noted that the step of the first financial institution transmitting a first confirmation to the mobile communication device may be carried out upon receipt of the payment order from the mobile communication device, or upon receipt of an amount transfer acknowledgement from the second financial institution. In the former case, the first confirmation confirms the receipt of the payment order by the first financial institution. In the latter case, the second financial institution effectively sends a third confirmation to the first financial institution, confirming the receipt of the transferred amount. Alternatively, the step of the first financial institution transmitting a first confirmation to the mobile communication device may be omitted, in which case the confirmation is provided by the password.

By sending a previously stored password from the second financial institution to the mobile communication device, the recipient of the payment is able to know that the payment transaction was successful. The password, which is typically known to the user of the payment card only, may be displayed or rendered by the mobile telephone device and thus be checked by the recipient. If the password corresponds to a previously stored password associated with the transaction, the payment transaction was successful. If the password fails to correspond, an error may have occurred or the user of the mobile communication device may have been fraudulent. Accordingly, the (secret) password allows the recipient of the payment to verify the transaction.

A password may comprise alphanumeric characters and may consists of a name, a string of numbers, a combination of letters and numbers, but may also comprise an image or a sound (audio representation). For audio passwords, ring tones may be used. The password transferred to the mobile communication device may comprise a pointer to a ring tone, for example a code selecting a ring tone stored in the mobile communication device. In such embodiments, the pointers or codes are previously stored at and transferred by the second financial institution, while the ring tones are previously stored in the mobile communication device. Instead of ring tones, stored graphics or stored names and/or numerical strings may be used.

It is preferred that the password is changed after each payment. This enhances the security as a fraudulent user of the mobile communication device will not be able to render the same password twice. For this reason, a set of passwords may previously be stored at the second financial institution. These passwords may be generated by the user of the payment card, or may be generated by the second financial institution on behalf of the payment card.

As explained above, the step of rendering the password may involve displaying text or a graphical representation of the password. Alternatively, or additionally, the step of rendering the password may involve playing an auditory representation of the password.

The security of the method is enhanced when the mobile communication device requests, before transmitting the payment order, an access code. That is, a software application running on the mobile communication device may only function, or may only transmit the payment order, if access has been gained using an access code, such as a PIN (Personal Identification Number) code or other identification (e.g. a finger print).

The input unit may be constituted by a keyboard, a touchpad unit or a similar unit suitable for entering numerical or alphanumerical data. Alternatively, or additionally, the input unit may comprise a bar code reader.

It is preferred that the first and second near field communication units are arranged for the NFC techniques standardised in the ECMA-340 and ISO/IEC-18092 standards. These techniques are based upon (electromagnetic) RF communication at a frequency of 13.56 MHz. However, other types of wireless short-range communication techniques may also be used, for example Infra-Red (IR) or Bluetooth® communication techniques. Accordingly, the present invention is not limited to electromagnetic (RF) techniques or the NFC protocols but also includes light (e.g. IR or laser) transmission techniques using the same or other protocols.

In some embodiments, the first financial institution and the second financial institution are the same. However, typically the first financial institution and the second financial institution will be different financial institutions.

The present invention additionally provides a computer program product for carrying out the method as defined above. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet. Such a computer program product may be used in the mobile communication device, the payment card or in a financial institution.

The present invention further provides a system for making payments, the system comprising a mobile communication device and a payment card suitable for use in the method defined above.

The present invention will further be explained below with reference to exemplary embodiments illustrated in the accompanying drawings, in which:
Fig. 1 schematically shows an embodiment of a payment system according to the present invention.
Fig. 2 schematically shows an embodiment of a method according to the present invention.

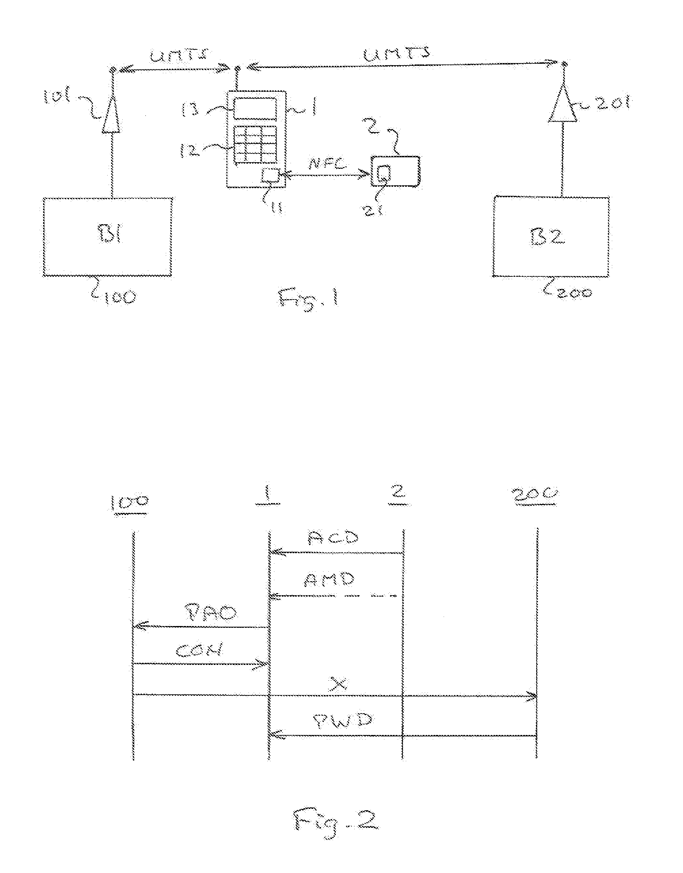

The payment system shown merely by way of non-limiting example in Fig. 1 comprises a mobile communication device 1, a payment card 2, a first financial institution or bank (B1) 100 and a second financial institution or bank (B2) 200.

The mobile communication device 1 and the payment card 2 are each provided with a respective short range wireless communication unit 11 and 21. In the preferred embodiment shown, the short range wireless communication units 11 and 21 are both NFC (near field communication) units designed for operating according to the ECMA-340, ISO/IEC-18092 and/or similar standards. The mobile communication device 1 is further provided with a keypad 12 and a display screen 13.

The mobile communication device 1 is, in the embodiment shown, a mobile (cellular) telephone device suitable for use with a GSM (Groupe Spéciale Mobile), UMTS (Universal Mobile Telecommunications System) or other type of mobile (cellular) telephone network. In Fig. 1, UMTS is mentioned by way of example, but the invention is of course not limited to the UMTS system.

The payment card 2 may be a credit card or similar type of card, provided with an NFC unit 21. The payment card 2 may be a so-called smart card having cryptographic processing capabilities, but this is not essential.

The mobile telephone network includes antenna masts 101 and 102 which allow the mobile communication device 1 to wirelessly communicate with the first financial institution 100 and the second financial institution 200.

The NFC units 11 and 21 allow the mobile communication device 1 and the payment card 2 to exchange data at a small distance, without involving the mobile (cellular) telephone network. In other embodiments, the device 1 may be a Personal Digital Assistant (PDA), a laptop computer or another device having facilities for both mobile (cellular) and short-range wireless communication.

The exchange of data between the mobile communication device, the payment card and the financial institutions is schematically illustrated, by way of non-limiting example, in Fig. 2.

In the embodiment of Fig. 2 it is assumed that a payment function of the mobile communication device 1 has been activated, for example by selecting a menu option and entering an access code, such as a PIN code. The payment function of the payment card 2 may have been activated too, or is always on.

When the NFC units of the mobile communication device 1 and the payment card 2 are within each other's active range, the second NFC unit 21 transfers account data ACD to the first NFC unit 11. These account data ACD may comprise the bank account number (for example the IBAN) and personal data (for example the name and address) of the user of the payment card 2. The NFC units may initiate this data transfer, or may prompt their users for approval.

In the next step, amount data AMD indicative of the amount (X) to be transferred are received by the mobile communication device 1. The amount data AMD may also be transferred by the NFC units, or may be entered in the keypad of the first mobile communication unit 1. The account data ACD and the amount data AMD together constitute a payment order PAO which is sent to the first financial institution via the mobile communication network, using a wireless link. In GSM systems, a SMS message (text message) or GPRS data transfer may be used for this purpose.

Upon receipt of the payment order PAO, the first financial institution 100 send a (first) confirmation CON to the mobile communication device 1 and transfer the amount X indicated by the amount data AMD to the second financial institution 200. The amount X may be transferred using a conventional data connection (not shown) between the financial institutions. It will be understood that the first and second financial institutions may be the same, in which this transfer is internal. In some embodiments, the first confirmation CON may be omitted or may be sent later.

Upon receipt of the amount X, the second financial institution 200 sends a (second) confirmation comprising a password PWD to the mobile communication device 1 via the mobile communication network (antenna mast 201). This password PWD was previously stored at the second financial institution 200 by or for the user of the payment card 2.

Optionally, the second financial institution 200 additionally sends an acknowledgement (or third confirmation, not shown) to the first financial institution 100, confirming the receipt of the amount X. This acknowledgement may be sent via the mobile communication network or via another network.

In some embodiments, the first confirmation CON will only be sent when the first financial institution has received this acknowledgement from the second financial institution 200. It can also be envisaged that the second financial institution 200 sends the (first) confirmation CON to the mobile communication device 1. This, of course, requires previously sending a suitable identifier of the mobile communication device 1, such as a mobile telephone number, to the second financial institution 200.

By using a first and a second confirmation, the users of both mobile communication devices receive confirmation of the successful completion of the payment transaction. More in particular, by sending a password PWD from the second financial institution 200 (associated with the recipient of the payment) to the mobile communication device 1 (associated with the person making the payment), the payer can show the recipient that the payment transaction was successfully completed.

The password PWD, which is typically secret and therefore only known to the user of the payment card 2, may be displayed on the display screen 13 of the mobile communication device 1, or may rendered in an alternative manner. By showing the password to the user of the payment card (the recipient of the payment), the user of the mobile communication device (the person making the payment) can prove that the payment was validly made.

The present invention is based upon the insight that a payment involving a single mobile telecommunication device and a payment card owned by different parties requires a secure confirmation mechanism to be practicable. The present invention benefits from the further insight that a secret password, known only to the receiving party of the financial transaction, can advantageously serve to acknowledge a successful payment.

It is noted that any terms used in this document should not be construed so as to limit the scope of the present invention. In particular, the words "comprise(s)" and "comprising" are not meant to exclude any elements not specifically stated. Single elements may be substituted with multiple elements or with their equivalents.

It will be understood by those skilled in the art that the present invention is not limited to the embodiments illustrated above and that many modifications and additions may be made without departing from the scope of the invention as defined in the appending claims.

## Claims

1. A method of making a payment using a mobile communication device (1) and a payment card (2), both the mobile communication device (1) and the payment card (2) being provided with a respective near field communication unit (11, 21) and at least the mobile communication device (1) being provided with an input unit (12) for inputting data, the method comprising the steps of:
• the mobile communication device (1) receiving, through its near field communication unit (11), account data (ACD) from the payment card (2),
• the mobile communication device (1) receiving, through its near field communication unit (11) or its input unit (12), amount data (AMD) indicative of an amount (X) to be paid,
• the mobile communication device (1) transmitting, via a mobile communication link, a payment order (PAO) to a first financial institution (100), the payment order including the account data (ACD) and the amount data (AMD),
• the first financial institution (100), upon receipt of the payment order (PAO), transferring the amount indicated by the amount data (AMD) to a second financial institution (200) identified by the account data (ACD),
• the first financial institution (100) transmitting a confirmation (CON) to the mobile communication device (1),
• the second financial institution (200), upon receipt of the amount (X), sending a previously stored password (PWD) to the mobile communication device (1), and
• the mobile communication device (1) rendering the password (PWD).

2. The method according to claim 1, wherein the password (PWD) is changed after each payment.

3. The method according to claim 1 or 2, wherein a set of passwords (PWD) is previously stored at the second financial institution (200).

4. The method according to any of the preceding claims, wherein the step of rendering the password (PWD) involves displaying text or a graphical representation of the password.

5. The method according to any of the preceding claims, wherein the step of rendering the password (PWD) involves playing an auditory representation of the password.

6. The method according to any of the preceding claims, wherein the mobile communication device (1) requests, before transmitting the payment order (PAO), an access code.

7. The method according to any of the preceding claims, wherein the input unit (12) is a keyboard or touchpad unit.

8. The method according to any of the preceding claims, wherein the first financial institution (100) and the second financial institution are the same.

9. A computer program product for carrying out the method according to any of claims 1-9.

10. A system for making payments, the system comprising a mobile communication device (1) and a payment card (2) suitable for use in the method according to any of claims 1-8.
